(19) Europäisches Patentamt
European Patent Office
Office européen des brevets

(11) Veröffentlichungsnummer: **0 618 273 A2**

# (12) EUROPÄISCHE PATENTANMELDUNG

(21) Anmeldenummer: **94104836.5**

(51) Int. Cl.[5]: **C08L 83/16**, C08K 3/34

(22) Anmeldetag: **26.03.94**

(30) Priorität: **01.04.93 DE 4310674**

(43) Veröffentlichungstag der Anmeldung:
**05.10.94 Patentblatt 94/40**

(84) Benannte Vertragsstaaten:
**AT BE DE FR GB IT NL**

(71) Anmelder: **Solvay Deutschland GmbH**
**Hans-Böckler-Allee 20**
**D-30173 Hannover (DE)**

(72) Erfinder: **Nover, Christoph**
**Im Stiegfeld 91**
**D-31319 Sehnde (DE)**

(74) Vertreter: **Lauer, Dieter, Dr.**
**c/o Solvay Deutschland GmbH**
**Hans-Böckler-Allee 20**
**D-30173 Hannover (DE)**

## (54) Plastisches Material.

(57) Die Erfindung betrifft ein plastisches Material das Siliciumcarbidpulver, Polycarbosilan, organisches Lösungsmittel, gegebenenfalls Borverbindungen und/oder andere Hilfsstoffe, vorzugsweise Porosierungsmittel enthält sowie seine Verwendung zur Herstellung von Formstücken und Halbzeugen durch plastische Formgebung.

EP 0 618 273 A2

Die Erfindung betrifft ein plastisches Material auf der Basis von Siliciumcarbidpulver und Organo-Silicium-Verbindungen sowie seine Verwendung zur Herstellung von Formstücken und Halbzeugen und ein Verfahren zur Herstellung von Keramikartikeln.

Es ist bekannt, Formkörper mit Organo-Silicium-Verbindungen zu beschichten, um die Korrosions-, Wärme- und Oxidationsbeständigkeit dieser Formkörper durch eine anschließende Wärmebehandlung zu verbessern.

Die Verwendung von Organo-Silicium-Verbindungen als Bindemittel für Siliciumcarbidpulver ist ebenfalls bekannt. In der DE-OS 3 007 384 wird die Möglichkeit beschrieben, Siliciumpulver mit einem Sinterhilfsmittel und einem Organo-Siliciumpolymer unter Wärmeeinwirkung zu verkneten und diese Mischung durch Spritzvergießen zu verformen und anschließend zu wärmebeständigen Keramikartikeln zu brennen. Als Organo-Siliciumpolymer werden hierbei Polyborsiloxane oder Polycarbosilane, die Methylgruppen und Wasserstoff als Substituenten am Silicium des Molekülgerüstes enthalten, verwendet.

Aus der DE-OS 3 409 385 ist eine Mischung aus Siliciumcarbidpulver, einer Organo-Silicium-Verbindung und einem Gleitmittel, ausgewählt aus der Gruppe der höheren Fettsäuren, bekannt. Diese Mischung kann zu Presslingen geformt und gesintert werden. Hierbei ist der Einsatz des Gleitmittels wesentlich, um der Mischung ein gutes Fließvermögen und eine verbesserte Formtrennbarkeit zu verleihen, denn es ist ebenfalls bekannt, daß Mischungen aus Siliciumcarbidpulver und einer Organo-Silicium-Verbindung ein geringes Fließvermögen aufweisen. Dadurch kann man solche Mischungen nicht plastisch verformen bzw. die Mischung bleibt an den Formen kleben, selbst wenn die Formen mit Trennmitteln beschichtet sind, so daß die Formkörper sehr oft schadhaft sind. Eine Massenproduktion von geformten Produkten ist daher kaum möglich.

Ein Nachteil der bekannten Lösungen ist außerdem die geringe keramische Ausbeute, da während der keramischen Behandlung z. B. das Gleitmittel ausgebrannt werden muß, was zwangsläufig eine Erhöhung der Porosität zur Folge hat.

Das Ziel der Erfindung lag nunmehr darin, ein Material zur Verfügung zu stellen, das sich sowohl durch plastische Formgebung in die gewünschte Gestalt bringen läßt und gegebenenfalls anschließend keramisiert werden kann, als auch direkt auf Grund seiner plastischen Eigenschaften Verwendung finden kann, wobei bei der Keramisierung der Formkörper eine hohe keramische Ausbeute erreicht wird.

Erfindungsgemäß ist das plastische Material gekennzeichnet durch eine Mischung aus

- 50 bis 95 Gewichtsteile Siliciumcarbidpulver
- 5 bis 50 Gewichtsteile direkt dargestellte Phenylgruppen enthaltende Polycarbosilane
- gegebenenfalls 0,1 bis 3 Gewichtsteile einer Borverbindung und 6 bis 30 Gewichtsteile organischem Lösungsmittel, in dem das Polycarbosilan löslich oder quellbar ist.

Als Polycarbosilane werden zweckmäßig Polycarbosilane der allgemeinen Formel I

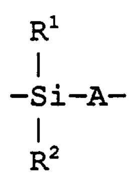

(I)

$R^1$ für Aryl, vorzugsweise Phenyl,

$R^2$ für H, Alkyl, Cycloalkyl, Aryl- oder Arylalkyl steht, wobei $R^2$ in verschiedenen Einheiten ein und desselben Polycarbosilans auch unterschiedliche Bedeutung haben kann und

A für einen geradkettigen oder verzweigten Alkylenrest oder für einen Cycloalkylenrest steht, wobei A in verschiedenen Einheiten ein und desselben Polycarbosilans auch unterschiedliche Bedeutung haben kann und bis zu maximal 50 % der Struktureinheiten der allgemeinen Formel I durch Struktureinheiten der allgemeinen Formel II

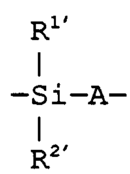

(II)

ersetzt sein können,

worin $R^{1'}$ und $R^{2'}$ für Alkyl, Cycloalkyl oder Arylalkyl stehen und $R^{1'}$ und $R^{2'}$ in verschiedenen Einheiten ein und desselben Polycarbosilans auch unterschiedliche Bedeutung besitzen können, und A für einen geradkettigen oder verzweigten Alkylenrest oder für einen Cycloalkylenrest steht, wobei A in verschiedenen Einheiten ein und desselben Polycarbosilans auch unterschiedliche Bedeutung besitzen kann.

Derartige Polycarbosilane werden durch Umsetzung der entsprechenden Dihalogensilane mit entsprechenden Dihalogenkohlenwasserstoffen in Gegenwart von Alkalimetall oder Magnesium hergestellt.

Es können auch Polycarbosilane verwendet werden, die Heteroelemente, vorzugsweise Bor oder Titan im Polycarbosilangerüst eingebaut haben. Die Heteroelemente sind hierbei ebenso wie die Siliciumatome über Alkylen-, Cycloalkylen- oder Arylenreste mit den übrigen Einheiten des Polycarbosilans verbunden. Derartige Heteroatom enthaltende Polycarbosilane werden durch Cokondensation einer Dihalogenheteroatom-Verbindung, vorzugsweise mit Bor oder Titan als Heteroatom, mit wenigstens einem Dihalogensilan und wenigstens einem Dihalogenkohlenwasserstoff in Gegenwart von Alkalimetall oder Magnesium hergestellt.

Bei Verwendung derartiger Heteroatom enthaltender Polycarbosilane als Mischungsbestandteil kann auf den Zusatz einer Borverbindung verzichtet werden.

Als Borverbindungen werden vorzugsweise Borcarbid, Bor oder Boride verwendet.

Als quellfähige Polycarbosilane sind solche Polycarbosilane zu verstehen, die der allgemeinen Formel I oder I und II entsprechen und durch thermische Behandlung gezielt vernetzt wurden.

Erfindungsgemäß enthält das plastische Material organisches Lösungsmittel aus der Gruppe der Alkane, Chloralkane, Aromaten, Ether, Polyether oder Polyglykole. Vorzugsweise werden Xylol, Triethylenglykoldimethylether oder Polyethylenglykol verwendet bzw. Lösungsmittel die einen Siedepunkt größer 100 °C haben.

Der geeignete Mengenanteil des Lösungsmittels kann innerhalb des Bereiches von 6 bis 30 Gewichtsteilen liegen, bezogen auf das Gewicht der Gesamtmasse des plastischen Materials, wobei die Menge sich nach dem gewünschten Verwendungszweck des plastischen Materials richtet.

Dem erfindungsgemäßen plastischen Material können gegebenenfalls auch weitere Hilfsstoffe, vorzugsweise solche, die die Porosität der Keramikteile erhöhen, zugesetzt werden.

Zur Herstellung der Mischung können zunächst die Polycarbosilane in den Lösungsmittel gelöst bzw. gequollen und danach mit dem Siliciumcarbidpulver und den übrigen Komponenten verknetet werden oder die Mischungskomponenten werden gleichzeitig miteinander in Kontakt gebracht.

Zum Quellen werden die Polycarbosilane mit dem Lösungsmittel versetzt und ca. 2 Stunden stehengelassen. Danach werden sie im Ultraturrax homogenisiert und anschließend mit den übrigen Mischungskomponenten in Kontakt gebracht.

Nach dem gründlichen Durchmischen bzw. Kneten der Mischung kann das überschüssige Lösungsmittel bis zu einem gewünschten Maße abgedampft werden.

Das so hergestellte plastische Material kann dann z. B. durch plastische Formgebung wie Formpressen, Extrusionsformen oder Formspritzen in die gewünschte Gestalt gebracht und anschließend bei üblichen Keramisierungsbedingungen keramisiert werden, wobei aufgrund der Mischungsbestandteile die keramische Ausbeute hoch ist und das Sintern zu dichten Formkörpern möglich ist.

Die Keraminsierung erfolgt üblicherweise bei Temperaturen größer 1.000 °C und das Sintern zu dichten Formkörpern bei Temperaturen größer 2.000 °C.

Mit dem erfindungsgemäßen Material können auch poröse keramische Formkörper hergestellt werden. Für diesen Fall wurde dem plastischen Material ein sogenanntes Porosierungsmittel als Mischungskomponente zugegeben, in einer Menge, die der gewünschten Porosität der keramisierten Formkörper entspricht. Als Porosierungsmittel können beispielsweise Stärke, Holzmehl oder Kohle verwendet werden. Die Keramisierung und gegebenenfalls eine Sinterung erfolgen bei den obengenannten bekannten Bedingungen.

Die so hergestellten porösen Formkörper zeichnen sich durch hohe Festigkeit aufgrund ihrer hochdichten, die Poren umgebenden Matrix aus.

Es ist ebenfalls möglich, das plastische Material zur Herstellung von Keramik-Keramikverbunden zu verwenden, indem die zu verbindenden Teile mit dem plastischen Material zusammengefügt werden und anschließend bei $T > 900$ °C gebrannt werden. Ebenso ist es möglich, das plastische Material aufgrund seiner guten plastischen Verformbarkeit direkt zu verwenden, ohne daß eine anschließende thermische Behandlung erfolgen muß.

Auf Grund seiner Eigenschaften kann das erfindungsgemäße Material sowohl zur Massenproduktion von Formkörpern oder Halbzeugen der unterschiedlichsten Formgebung als auch zur Herstellung von komplizierten Formen genutzt werden. Die Möglichkeit durch Variation des Lösungsmittelanteils die Viskosität des Materials bzw. sein Fließverhalten dem jeweilig gewünschten Formgebungsverfahren anzupassen, ist ein weiterer Vorteil des erfindungsgemäßen Materials.

Die nachfolgenden Beispiele sollen die Erfindung erläutern, aber nicht einschränken.
Aus dem erfindungsgemäßen Material wurden verschiedene Formen durch Extrusion hergestellt. Es wurde ein Extruder bekannter Bauart verwendet. Am Mundstück wurden Drücke von mindestens 10 bis 70 MPa benötigt. Das Anlegen höherer Drücke erhöht die Fördergeschwindigkeit.
Die Herstellung sehr dünner Stränge, z. B. Stränge mit einem Durchmesser von 0,2 mm erfordert den Einsatz lösungsmittelreicherer Massen als die Herstellung voluminöser Stränge, z. B. Rohre, die nur beim Einsatz lösungsmittelärmerer Massen gelingt.
Es wurden folgende Strangformen hergestellt:

| | | | |
|---|---|---|---|
| A | zylindrisch, Durchmesser | | 0,2 mm |
| B | zylindrisch, Durchmesser | | 0,5 mm |
| C | zylindrisch, Durchmesser | | 3,0 mm |
| D | Rohr, | Außendurchmesser<br>Innendurchmesser | 35 mm,<br>15 mm |

Tabelle 1

| Zusammensetzung der Mischungen in Gew.-% | | | | |
|---|---|---|---|---|
| | Mischung | | | |
| | 1 | 2 | 3 | 4 |
| Polydiphenylcarbosilan (D-PPC) | 17,0 | 17,0 | 18,0 | 18,0 |
| SiC-Pulver (Lonza UF15) | 67,4 | 67,4 | 71,4 | 71,4 |
| Borcarbid | 0,6 | 0,6 | 0,6 | 0,6 |
| Xylol | 15,0 | - | 10,0 | - |
| Triethylenglykoldimethylether | - | 15,0 | - | 10,0 |

**Tabelle 2:** Durchgeführte Extrusionen

| Mischung | 1 | 2 | 1 | 2 | 3 | 4 | 1 | 2 | 3 | 4 | 3 | 4 |
|---|---|---|---|---|---|---|---|---|---|---|---|---|
| Strangform | A | A | B | B | B | B | C | C | C | C | D | D |

## Patentansprüche

1. Plastisches Material, dadurch gekennzeichnet, daß es
   - 50 bis 95 Gewichtsteile Siliciumcarbidpulver
   - 50 bis 5 Gewichtsteile direkt dargestellte Phenylgruppen enthaltende Polycarbosilane,
   - gegebenenfalls 0,1 bis 3 Gewichtsteile Borverbindung
   - 6 bis 30 Gewichtsteile organisches Lösungsmittel, in dem das Polycarbosilan löslich oder quellbar ist und gegebenenfalls Hilfsstoffe enthält.

2. Plastisches Material nach Anspruch 1, dadurch gekennzeichnet, daß es organische Lösungsmittel aus der Gruppe der Alkane, Chloralkane, Aromaten, Ether, Polyether oder Polyglykole enthält.

3. Plastisches Material nach Anspruch 1, dadurch gekennzeichnet, daß es organische Lösungsmittel mit einem Siedepunkt größer 100 °C enthält.

4. Plastisches Material nach Anspruch 1, dadurch gekennzeichnet, daß es vorzugsweise Xylol, Triethylenglykoldimethylether oder Polyethylenglykol als organisches Lösungsmittel enthält.

5. Plastisches Material nach Anspruch 1, dadurch gekennzeichnet, daß es als Hilfsstoff ein Porosierungsmittel, vorzugsweise Stärke, Holzmehl oder Kohle enthält.

6. Verwendung des plastischen Materials nach Anspruch 1 bis 5 zur Herstellung von Formstücken und Halbzeugen, die durch anschließende thermische Behandlung keramisiert werden können.

7. Verfahren zur Herstellung von Formstücken und Halbzeugen nach Anspruch 6, dadurch gekennzeichnet, daß das plastische Material einer plastischen Formgebung insbesondere Guß, Spritzguß oder Extrusion unterzogen wird und anschließend bei Temperaturen oberhalb 1.000 °C keramisiert werden kann.

8. Verfahren zur Herstellung von Keramik-Keramikverbunden unter Verwendung des plastischen Materials nach Anspruch 1 bis 5, dadurch gekennzeichnet, daß die zu verbindenden Keramikteile mit dem plastischen Material zusammengefügt werden und eine anschließende thermische Behandlung zur Herstellung des Verbundes und zur Keramisierung des plastischen Materials erfolgt.